# EUROPEAN PATENT APPLICATION

(11) **EP 4 152 784 A2**
(43) Date of publication of application: **22.03.2023**
(21) Application number: 22216986.4
(22) Date of filing: 28.12.2022
(51) Int. Cl.: H04W 4/44, H04W 4/021

(54) **METHOD AND SYSTEM FOR VEHICLE-ROAD COLLABORATION, VEHICLE INTELLIGENT TERMINAL, AND CLOUD CONTROL PLATFORM**

(30) Priority: 28.12.2021 CN 202111626106
(71) Applicant: Apollo Intelligent Connectivity (Beijing) Technology Co., Ltd., Beijing 100176 (CN)
(72) Inventor: WANG, Kun, BEIJING, 100176 (CN); ZHANG, Zhuhua, BEIJING, 100176 (CN); LIU, Nanke, BEIJING, 100176 (CN)
(74) Representative: Laqua, Bernd Christian Kurt

(57) **Abstract**

The present disclosure provides a method and system for vehicle-road collaboration, a vehicle intelligent terminal, and a cloud control platform, and relates to the technical field of artificial intelligence, in particular to the technical field of autonomous driving and intelligent transportation. The implementation solution is: sending service information of a vehicle where the vehicle intelligent terminal is located to a non-central cloud control platform registered with the vehicle intelligent terminal; and receiving roadside information for aided driving or autonomous driving application services from the non-central cloud control platform.

## Description

### TECHNICAL FIELD

The present disclosure relates to the technical field of artificial intelligence, in particular to the technical field of autonomous driving and intelligent transportation, and in particular to a method, apparatus and system for vehicle-road collaboration, an electronic device, a vehicle-mounted intelligent terminal, a vehicle, a cloud control platform, a computer-readable storage medium, and a computer program product.

### BACKGROUND

Vehicle-road collaboration is the main development trend of autonomous driving and intelligent transportation in the future. Vehicles, roadsides, and a cloud control platform collaborate with one another for collaborative perception, collaborative computing, and collaborative decision-making control, which can solve a series of problems such as limited sensing range and poor reliability of a single vehicle, and inter-vehicle behavior games, and can also help realize the digitalization and intellectualization of road infrastructure and traffic management, and support the construction of a deeply integrated, highly coordinated, safe and efficient "pedestrian-vehicle-road-cloud" integration system.

Methods described in this section are not necessarily those previously envisaged or adopted. Unless otherwise specified, it should not be assumed that any method described in this section is considered the prior art simply because it is included in this section. Similarly, unless otherwise specified, the issues raised in this section should not be considered to have been universally acknowledged in any prior art.

### SUMMARY

The present disclosure provides a method, apparatus and system for vehicle-road collaboration, an electronic device, a vehicle intelligent terminal, a vehicle, a cloud control platform, a computer-readable storage medium, and a computer program product.

According to one aspect of the present disclosure, a method for vehicle-road collaboration is provided, and applied to a vehicle intelligent terminal. The method includes: sending service information of a vehicle where the vehicle intelligent terminal is located to a non-central cloud control platform registered with the vehicle intelligent terminal; and receiving roadside information for aided driving or autonomous driving application services from the non-central cloud control platform.

According to another aspect of the present disclosure, a method for vehicle-road collaboration is provided, and applied to a vehicle intelligent terminal platform. The method includes: sending a geo-fence request to a central cloud control platform; receiving geo-fence information from the central cloud control platform, the geo-fence information including a service address of a target non-central cloud control platform; sending, based on the service address of the target non-central cloud control platform, a registration application for a target vehicle intelligent terminal to the target non-central cloud control platform; receiving registration information of the target vehicle intelligent terminal from the target non-central cloud control platform; sending an authorization and authentication request of the target vehicle intelligent terminal to the target non-central cloud control platform; and receiving an authorization and authentication result of the target vehicle intelligent terminal from the target non-central cloud control platform.

According to yet another aspect of the present disclosure, a method for vehicle-road collaboration is provided, and applied to a central cloud control platform. The method includes: receiving a geo-fence request from a target vehicle intelligent terminal platform; and sending geo-fence information to the target vehicle intelligent terminal platform, the geo-fence information including a service address of a target non-central cloud control platform.

According to yet another aspect of the present disclosure, a method for vehicle-road collaboration is provided, and applied to a non-central cloud control platform. The method includes: receiving a registration application for a target vehicle intelligent terminal from a target vehicle intelligent terminal platform; sending registration information of the target vehicle intelligent terminal to the target vehicle intelligent terminal platform; receiving an authorization and authentication request of the target vehicle intelligent terminal from the target vehicle intelligent terminal platform; sending an authorization and authentication result of the target vehicle intelligent terminal to the target vehicle intelligent terminal platform; receiving service information of a vehicle where the target vehicle intelligent terminal is located from the target vehicle intelligent terminal; and sending roadside information for aided driving or autonomous driving application services to the vehicle intelligent terminal.

According to yet another aspect of the present disclosure, an apparatus for vehicle-road collaboration is provided, and applied to a vehicle intelligent terminal. The apparatus includes: a first sending unit, configured to send service information of a vehicle where the vehicle intelligent terminal is located to a non-central cloud control platform registered with the vehicle intelligent terminal; and a first receiving unit, configured to receive roadside information for aided driving or autonomous driving application services from the non-central cloud control platform.

According to yet another aspect of the present disclosure, an apparatus for vehicle-road collaboration is provided, and applied to a vehicle intelligent terminal platform. The apparatus includes: a second sending unit, configured to send a geo-fence request to a central cloud control platform; a second receiving unit, configured to receive geo-fence information from the central cloud control platform, the geo-fence information including a service address of a target non-central cloud control platform; a third sending unit, configured to send, based on the service address of the target non-central cloud control platform, a registration application for a target vehicle intelligent terminal to the target non-central cloud control platform; a third receiving unit, configured to receive registration information of the target vehicle intelligent terminal from the target non-central cloud control platform; a fourth sending unit, configured to send an authorization and authentication request of the target vehicle intelligent terminal to the target non-central cloud control platform; and a fourth receiving unit, configured to receive an authorization and authentication result of the target vehicle intelligent terminal from the target non-central cloud control platform.

According to yet another aspect of the present disclosure, an apparatus for vehicle-road collaboration is provided, and applied to a central cloud control platform. The apparatus includes: a fifth receiving unit, configured to receive a geo-fence request from a target vehicle intelligent terminal platform; and a fifth sending unit, configured to send geo-fence information to the target vehicle intelligent terminal platform, the geo-fence information including a service address of a target non-central cloud control platform.

According to yet another aspect of the present disclosure, an apparatus for vehicle-road collaboration is provided, and applied to a non-central cloud control platform. The apparatus includes: a sixth receiving unit, configured to receive a registration application for a target vehicle intelligent terminal from a target vehicle intelligent terminal platform; a sixth sending unit, configured to send registration information of the target vehicle intelligent terminal to the target vehicle intelligent terminal platform; a seventh receiving unit, configured to receive an authorization and authentication request of the target vehicle intelligent terminal from the target vehicle intelligent terminal platform; a seventh sending unit, configured to send an authorization and authentication result of the target vehicle intelligent terminal to the target vehicle intelligent terminal platform; an eighth receiving unit, configured to receive service information of a vehicle where the target vehicle intelligent terminal is located from the target vehicle intelligent terminal; and an eighth sending unit, configured to send roadside information for aided driving or autonomous driving application services to the target vehicle intelligent terminal.

According to yet another aspect of the present disclosure, a system for vehicle-road collaboration is provided, including: the above apparatus applied to a vehicle intelligent terminal; the above apparatus applied to a vehicle intelligent terminal platform; the above apparatus applied to a central cloud control platform; and the above apparatus applied to a non-central cloud control platform.

According to yet another aspect of the present disclosure, an electronic device is provided, including: at least one processor; and a memory in communication connection with the at least one processor, wherein the memory stores instructions capable of being executed by the at least one processor, and the instructions are executed by the at least one processor so that the at least one processor may execute the above method.

According to yet another aspect of the present disclosure, a non-transitory computer readable storage medium storing computer instructions is provided, wherein the computer instructions are configured to enable a computer to execute the above method.

According to yet another aspect of the present disclosure, a computer program product is provided, including a computer program, wherein the computer program, when executed by a processor, implements the above method.

According to yet another aspect of the present disclosure, a vehicle intelligent terminal is provided, including: at least one processor; and a memory in communication connection with the at least one processor, wherein the memory stores instructions capable of being executed by the at least one processor, and the instructions are executed by the at least one processor to enable the at least one processor to execute the method executed by the vehicle intelligent terminal in the above methods.

According to another aspect of the present disclosure, a vehicle is provided, including the above vehicle intelligent terminal.

According to yet another aspect of the present disclosure, a vehicle intelligent terminal platform is provided, including: at least one processor; and a memory in communication connection with the at least one processor, wherein the memory stores instructions capable of being executed by the at least one processor, and the instructions are executed by the at least one processor to enable the at least one processor to execute the method executed by the vehicle intelligent terminal platform in the above methods.

According to another aspect of the present disclosure, a central cloud control platform is provided, including: at least one processor; and a memory in communication connection with the at least one processor, wherein the memory stores instructions capable of being executed by the at least one processor, and the instructions are executed by the at least one processor to enable the at least one processor to execute the method executed by the central cloud control platform in the above methods.

According to another aspect of the present disclosure, a non-central cloud control platform is provided, including: at least one processor; and a memory in communication connection with the at least one processor, wherein the memory stores instructions capable of being executed by the at least one processor, and the instructions are executed by the at least one processor to enable the at least one processor to execute the method executed by the non-central cloud control platform in the above methods.

According to another aspect of the present disclosure, a system for vehicle-road collaboration is provided, including: the above vehicle intelligent terminal platform; the above central cloud control platform; and the above non-central cloud control platform.

According to one or more embodiments of the present disclosure, by performing information interaction with the non-central cloud control platform registered with the vehicle where the vehicle intelligent terminal is located, to receive the roadside information for the aided driving or autonomous driving application services, aided driving or autonomous driving services may be provided for a vehicle intelligent terminal that does not support direct connection to a road side unit, thereby reducing requirements for the vehicle intelligent terminal and roadside infrastructure, and strengthening and improving the comprehensive technical capability of vehicle-road-cloud collaborative information interaction.

It should be understood that the content described in this part is not intended to identify key or important features of the embodiments of the present disclosure, nor is it used to limit the scope of the present disclosure. Other features of the present disclosure will be easily understood by the following description.

### BRIEF DESCRIPTION OF THE DRAWINGS

The accompanying drawings exemplarily illustrate embodiments and form part of the description, which, together with the textual description of the description, is used to explain exemplary implementations of the embodiments. The illustrated embodiments are for illustrative purposes only and do not limit the scope of the claims. In all the accompanying drawings, the same reference numerals refer to similar but not necessarily identical elements.
Fig. 1 is a schematic diagram of an exemplary system in which various methods described herein may be implemented according to an embodiment of the present disclosure;
Fig. 2 is a flow diagram of overall service of a system for vehicle-road collaboration according to an embodiment of the present disclosure;
Fig. 3 is a flow diagram of a method for vehicle-road collaboration according to an embodiment of the present disclosure;
Fig. 4 is a flow diagram of a method for vehicle-road collaboration according to an embodiment of the present disclosure;
Fig. 5 is a flow diagram of a method for vehicle-road collaboration according to an embodiment of the present disclosure;
Fig. 6 is a flow diagram of a method for vehicle-road collaboration according to an embodiment of the present disclosure;
Fig. 7 is a flow diagram of a method for vehicle-road collaboration according to an embodiment of the present disclosure;
Fig. 8 is a flow diagram of a method for vehicle-road collaboration according to an embodiment of the present disclosure;
Fig. 9 is a structural block diagram of an apparatus for vehicle-road collaboration according to an embodiment of the present disclosure;
Fig. 10 is a structural block diagram of an apparatus for vehicle-road collaboration according to an embodiment of the present disclosure;
Fig. 11 is a structural block diagram of an apparatus for vehicle-road collaboration according to an embodiment of the present disclosure;
Fig. 12 is a structural block diagram of an apparatus for vehicle-road collaboration according to an embodiment of the present disclosure;
Fig. 13 is a structural block diagram of a system for vehicle-road collaboration according to an embodiment of the present disclosure; and
Fig. 14 is a structural block diagram of an exemplary electronic device that may be configured to implement embodiments of the present disclosure.

### DETAILED DESCRIPTION

The exemplary embodiments of the present disclosure are described below in combination with the accompanying drawings, including various details of the embodiments of the present disclosure to facilitate understanding, which should be considered only exemplary. Therefore, those of ordinary skill in the art should recognize that various changes and modifications may be made to the embodiments described herein without departing from the scope of the present disclosure. Similarly, for clarity and conciseness, the description of well-known functions and structures is omitted from the following description.

In the present disclosure, unless otherwise specified, the terms "first", "second" and the like are used to describe various elements and are not intended to limit the positional relationship, temporal relationship or importance relationship of these elements. These terms are only used to distinguish one element from another element. In some examples, a first element and a second element may point to the same instance of the element, and in some cases, based on the context description, they can also refer to different instances.

The terms used in the description of the various examples in the present disclosure are only for the purpose of describing specific examples and are not intended to be limiting. Unless the context clearly indicates otherwise, if the quantity of elements is not specifically limited, the element may be one or more. In addition, the term "and/or" as used in the present disclosure covers any and all possible combinations of the listed items.

In the related art, methods for vehicle-road collaboration cannot provide aided driving and autonomous driving application services for vehicles that do not support direct communication.

In order to solve the above problem, in the present disclosure, by performing information interaction with a non-central cloud control platform registered with a vehicle where a vehicle intelligent terminal is located, to receive roadside information for the aided driving or autonomous driving application services, aided driving or autonomous driving services may be provided for a vehicle intelligent terminal that does not support direct connection to a road side unit, thereby reducing requirements for the vehicle intelligent terminal and roadside infrastructure, and strengthening and improving the comprehensive technical capability of vehicle-road-cloud collaborative information interaction.

Abbreviations used in the present disclosure will be explained as follows.
ASN. 1: Abstract Syntax Notation One
BSM: Basic Safety Message
CIM: Collaborative Interaction Message
DE: Data Element
DF: Data Frame
HTTP: Hyper Text Transport Protocol
HTTPS: Hyper Text Transport Protocol Over Secure Socket Layer
JSON: Javascript Object Notation
MAP: Map Message
MQ: Message Queue
OAuth 2.0: Open Authorization 2.0
OBU: Onboard Unit
PAM: Parking Area Map
PMM: Platooning Management Message
Protocol Buffer: An Independent Data Exchange Format
PSM: Pedestrian Safety Message
RAM: Roadside for Autonomous Driving Message
RSC: Roadside Coordination
RSCU: Road Side Computing Unit
RSCV: Roadside Control Vehicle
RSI: Road Side Information
RSM: Road Side Message
RSU: Road Side Unit
RTCM: Radio Technical Commission for Maritime Services
SPAT: Signal Phase and Timing Message
SSM: Sensor Sharing Message
T-Box: Telematics Box
TEST: Test Message
TPM: Traffic Probe Message
UDP: User Datagram Protocol
UTF: Unicode Transformation Format
V2N: Vehicle to Network
V2X: Vehicle to Everything
VIR: Vehicle Intention and Request
VPM: Vehicle Payment Message
WebSocket: A TCP-Based Full-Duplex Communication Protocol

The embodiments of the present disclosure will be described in detail below in combination with the accompanying drawings.

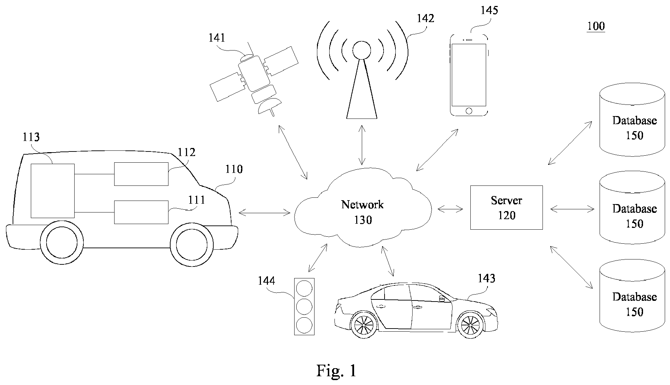

Fig. 1 shows a schematic diagram of an exemplary system 100 in which various methods and apparatuses described herein may be implemented according to an embodiment of the present disclosure. Referring to Fig. 1, the system 100 includes a motor vehicle 110, a server 120, and one or more communication networks 130 that couple the motor vehicle 110 to the server 120.

In an embodiment of the present disclosure, the motor vehicle 110 may include a computing device according to an embodiment of the present disclosure, and/or be configured to perform a method according to an embodiment of the present disclosure.

The server 120 may run one or more services or software applications that may support information interaction between a vehicle intelligent terminal and a cloud control platform via cellular communication to realize a method for vehicle-road coordination. In certain embodiments, the server 120 may further provide other service or software applications that may include non-virtual environments and virtual environments. In a configuration shown in Fig. 1, the server 120 may include one or more components implementing functions executed by the server 120. These components may include a software component, a hardware component or their combinations that may be executed by one or more processors. The users of the motor vehicle 110 may sequentially utilize one or more client applications to interact with the server 120 so as to utilize services provided by these components. It should be understood that various different system configurations are possible, which may be different from the system 100. Therefore, Fig. 1 is an example of a system for implementing the various methods described herein, and is not intended to be limiting.

The server 120 may include one or more general-purpose computers, dedicated server computers (e.g., personal computer (PC) servers, UNIX servers, and midrange servers), blade servers, mainframe computers, server clusters, or any other suitable arrangement and/or combination. The server 120 may include one or more virtual machines running virtual operating systems, or other computing frameworks involving virtualization (e.g., one or more flexible pools of logical storage devices that may be virtualized to maintain virtual storage devices of the server). In various embodiments, the server 120 may run one or more service or software applications providing the functions described below.

A computing unit in the server 120 may run one or more operating systems including any above operating system and any commercially available server operating system. The server 120 may further run any one of various additional server applications and/or intermediate layer applications, including an HTTP server, an FTP server, a CGI server, a JAVA server, a database server and the like.

In some implementations, the server 120 may include one or more applications to analyze and combine data feed and/or event updating received from the motor vehicle 110. The server 120 may further include one or more applications to display data feed and/or real-time events via one or more display devices of the motor vehicle 110.

The network 130 may be any type of network well known to those skilled in the art, which may use any one of various available protocols (including but not limited to TCP/IP, SNA, IPX, etc.) to support data communication. Only as examples, one or more networks 130 may be a satellite communication network, a local area network (LAN), an Ethernet-based network, a token ring, a wide area network (WAN), the Internet, a virtual network, a virtual private network (VPN), an intranet, an external network, a public switched telephone network (PSTN), an infrared network, a wireless network (including Bluetooth and WiFi), and/or any combination of these and other networks.

The system 100 may further include one or more databases 150. In certain embodiments, these databases may be used to store data and other information. For example, one or more of the databases 150 may be used to store, for example, information of video files and video files. The data storage bases 150 may reside at various positions. For example, a data storage base used by the server 120 may be local to the server 120 or may be away from the server 120 and may communicate with the server 120 via and based on a network or specific connection. The data storage bases 150 may be of different types. In certain embodiments, the data storage base used by the server 120 may be a database, such as a relational database. One or more of these databases may respond to a command to store, update and retrieval data to and from the databases.

In certain embodiments, one or more of the databases 150 may further be used by applications to store application data. The databases used by the applications may be different types of databases, such as a key value storage base, an object storage base or a conventional storage base supported by a file system.

The motor vehicle 110 may include sensors 111 configured to sense the surrounding environment. The sensors 111 may include one or more of the following sensors: vision cameras, infrared cameras, ultrasonic sensors, millimeter-wave radar, and laser radar (LiDAR). Different sensors may provide different detection accuracy and range. Cameras may be installed in the front, rear or other positions of the vehicle. The vision cameras may capture what's inside and outside the vehicle in real time and present it to a driver and/or passengers. In addition, by analyzing pictures captured by the visual cameras, information such as traffic light indications, intersection conditions, and driving states of other vehicles may be obtained. The infrared cameras may capture objects with night vision. The ultrasonic sensors may be installed around the vehicle to measure distances of objects outside the vehicle from the vehicle by using the characteristics of strong directionality of ultrasonic waves. The millimeter-wave radar may be installed in the front, rear or other positions of the vehicle to measure the distance of objects outside the vehicle from the vehicle by using the characteristics of electromagnetic waves. The laser radar may be installed in the front, rear or other positions of the vehicle to detect object edge and shape information for object recognition and tracking. Due to the Doppler effect, a radar apparatus may also measure changes in the speeds of the vehicle and moving objects.

The motor vehicle 110 may further include a communication apparatus 112. The communication apparatus 112 may include a satellite positioning module capable of receiving satellite positioning signals (e.g., BeiDou, GPS, GLONASS, and GALILEO) from satellites 141 and generating coordinates based on the signals. The communication apparatus 112 may further include a module for communicating with a mobile communication base station 142, and a mobile communication network may implement any suitable communication technology, such as GSM/GPRS, CDMA, LTE and other current or evolving wireless communication technologies (such as the 5G technology). The communication apparatus 112 may further have an Internet of vehicle or vehicle-to-everything (V2X) module configured to realize communication between the vehicle and the outside world, for example, vehicle-to-vehicle (V2V) communication with other vehicles 143 and vehicle-to-infrastructure (V2I) communication with infrastructure 144. In addition, the communication apparatus 112 may further have a module configured to communicate, for example, with a user terminal 145 (including but not limited to a smartphone, a tablet, or a wearable device such as a watch) via a wireless local area network or Bluetooth using the IEEE 802.11 standard. By using the communication apparatus 112, the motor vehicle 110 may also access the server 120 via the network 130.

The motor vehicle 110 may further include a control apparatus 113. The control apparatus 113 may include a processor in communication with various types of computer-readable storage apparatuses or media, such as a central processing unit (CPU) or graphics processing unit (GPU), or other special purpose processors, or the like. The control apparatus 113 may include an autonomous driving system for automatically controlling various actuators in the vehicle. The autonomous driving system is configured to control a powertrain, a steering system, a braking system, etc. of the motor vehicle 110 (not shown) via a plurality of actuators in response to inputs from a plurality of sensors 111 or other input devices to respectively control acceleration, steering and braking without or with limited human intervention. Part of processing functions of the control apparatus 113 may be realized by cloud computing. For example, some processing may be performed using an onboard processor, while other processing may be performed using computing resources in the cloud. The control apparatus 113 may be configured to perform the method according to the present disclosure. Furthermore, the control apparatus 113 may be implemented as one example of a computing device on a motor vehicle side (client side) according to the present disclosure.

The system 100 of Fig. 1 may be configured and operated in various modes to be capable of applying various methods and apparatuses described according to the present disclosure.

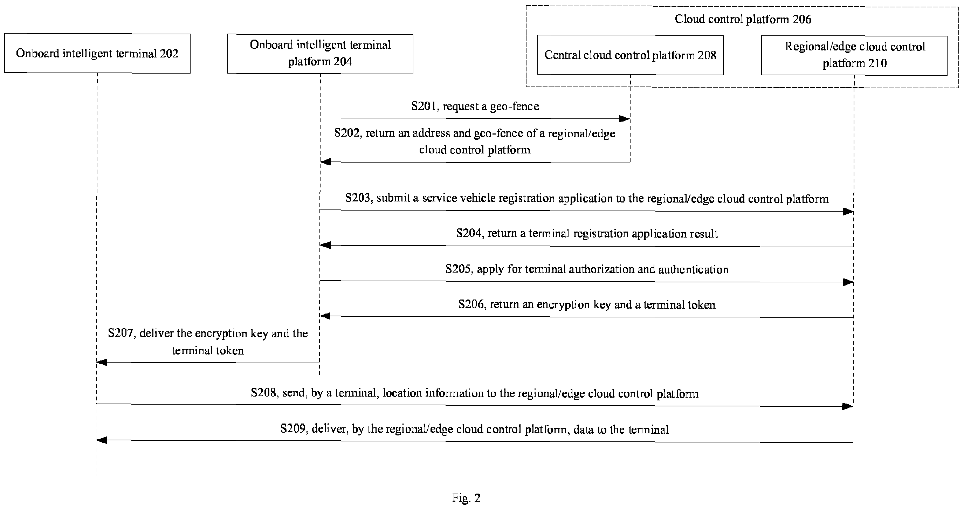

Fig. 2 is a flow diagram of an example general service of a system for vehicle-road collaboration according to an embodiment of the present disclosure. As shown in Fig. 2, the system for vehicle-road collaboration may include objects such as a vehicle intelligent terminal 202, a vehicle intelligent terminal platform 204, and a cloud control platform 206. The objects will be described in detail below.

The cloud control platform 206 is one of the components of the system for vehicle-road collaboration, and may generally be divided into edge cloud control platforms, regional cloud control platforms, and a central cloud control platform. In one example, the central cloud control platform may be a cloud control platform corresponding to a city, the regional cloud control platforms may be cloud control platforms corresponding to municipal districts, and the edge cloud control platforms may be cloud control platforms corresponding to streets. The regional cloud control platforms and the edge cloud control platforms may be deployed in corresponding geographical locations to facilitate data interaction with vehicle intelligent terminals within corresponding geographical areas.

The central cloud control platform 208 may store service addresses and geo-fence information of each regional cloud control platform and edge cloud control platform, and may not directly communicate with the vehicle intelligent terminal. The regional cloud control platforms and the edge cloud control platforms may complete the registration, authorization or authentication of the vehicle intelligent terminal (or a vehicle where the vehicle intelligent terminal is located) in response to a request of the vehicle intelligent terminal platform, and may directly communicate with the vehicle intelligent terminal to provide aided driving and autonomous driving services. For ease of expression, the present disclosure refers to the regional cloud control platforms and the edge cloud control platforms as regional/edge cloud control platforms 210 or non-central cloud control platforms, but does not intend to define it.

The system for vehicle-road collaboration further includes the vehicle intelligent terminal platform 204 which manages a plurality of vehicle intelligent terminals. The vehicle intelligent terminal platform is configured to obtain the service address and geo-fence information of the edge cloud control platforms from the central cloud control platform, and to register, authorize or authenticate the vehicle intelligent terminal (or the vehicle where the vehicle intelligent terminal is located) to the non-central cloud control platform. In one example, the vehicle intelligent terminal platform may be, for example, an original equipment manufacturer (OEM) of a car factory, an OEM cloud platform. The OEM cloud platform may manage all navigators (i.e., front-mounted vehicle intelligent terminals) of vehicles produced by the car factory. In another example, the vehicle intelligent terminal platform may be, for example, an operation and maintenance platform of a manufacturer of post-mounted vehicle intelligent terminals, and the operation and maintenance platform may manage all rear-mounted vehicle intelligent terminals produced by the manufacturer. It can be understood that, in the present disclosure, "navigator", "rear-mounted vehicle intelligent terminal" or other similar expressions may be equivalently replaced, and "vehicle intelligent terminal platform", "navigator platform", "vehicle intelligent terminal platform" or other similar expressions may be equivalently replaced. In some contexts of the present disclosure, "vehicles" and "vehicle intelligent terminal" may also be equivalently replaced, that is, it may refer to a vehicle equipped with a vehicle intelligent terminal, or a vehicle intelligent terminal installed on a vehicle, which is not limited here.

The system for vehicle-road collaboration may further include the vehicle intelligent terminal 202 managed by the above vehicle intelligent terminal platform. As described above, the vehicle intelligent terminal may include, for example, a front-mounted vehicle intelligent terminal (such as a navigator) and a rear-mounted vehicle-mounted intelligent terminal. By using the method of the present disclosure, various types of vehicle intelligent terminals may use the aided driving or autonomous driving services provided by the cloud control platform via cellular communication. The cellular communication between the vehicle intelligent terminal and the non-central cloud control platform may be, for example, using the cellular network provided by the network operator to realize data interaction.

The system for vehicle-road collaboration may also include other stakeholders, such as third-party platforms, including but not limited to: vehicle management and service platforms such as an OEM platform, a bus management service platform, a "two passenger transport vehicle and one dangerous goods transport vehicle" management platform, and a construction vehicle management platform; traffic safety and traffic management platforms such as an urban traffic management system and a highway management service platform; map service platforms including a navigation map platform and a high-precision map platform; meteorological service platforms; and travel service platforms.

The data interaction between objects in the system for vehicle-road collaboration will be described in detail below with reference to the steps in Fig. 2.

In step S201, the vehicle intelligent terminal platform requests a geo-fence from the central cloud control platform.

The vehicle/vehicle intelligent terminal platform initiates a geo-fence request to the central cloud control platform to determine a geographic range that may provide services.

In step S202, the central cloud control platform returns the addresses and geo-fences of the regional/edge cloud control platforms.

After receiving the geo-fence request, the central cloud control platform returns the service addresses of the regional/edge cloud control platforms to the vehicle/vehicle intelligent terminal platform. The central cloud control platform may return an address and geo-fence of a designated regional/edge cloud control platform in a designated city, and may also return addresses and geo-fences of all regional/edge cloud control platforms in all cities, which is not limited here.

The geo-fence may indicate a geographic area of a corresponding regional cloud control platform or edge cloud control platform, and may include, for example, the maximum longitude, minimum longitude, maximum latitude, and minimum latitude of the geographic area. The address of the regional/edge cloud control platform may include a service address of the regional cloud control platform or a service address of the edge cloud control platform. Further, the service address may include an address for registration authorization and an address for communication with the vehicle intelligent terminal.

According to some embodiments, the following requirements may be met during requesting a geo-fence:
a) Communication protocol: HTTP/HTTPS;
b) Requirement for a transmission format: JSON or Protocol Buffer; and
c) Encoding format requirement of JSON format data: UTF-8.

According to some embodiments, the data returned in step S202 are shown in Table 1 to Table 4 below. Table 2 is a data format (DF) of a data element City in a data element cityList, Table 3 is a data format of a data element Fencing in a data element fencingList, and Table 4 is a data format of a data element fencingServer.

**Table 1 Return data for the geo-fencing request**

| No. | Data element | Is it mandatory | Type | Note |
|---|---|---|---|---|
| 1 | oemCode | Yes | String | Unique identification number of a vehicle platform |
| 2 | cityCode | No | Integer | When null, return geo-fencing information of all cities |
| 3 | version | No | Integer | Version number of fencing data: the latest version by default |
| 4 | cityList | Yes | List<City> | City list |

**Table 2 DF_city**

| No. | Data element | Is it mandatory | Type | Note |
|---|---|---|---|---|
| 1 | cityCode | Yes | Integer | City No. |
| 2 | cityName | Yes | String | The name of a city |
| 3 | fencingList | Yes | List<Fencing> | Geo-fence list |

**Table 3 DF_fencing**

| No. | Data element | Is it mandatory | Type | Note |
|---|---|---|---|---|
| 1 | fencingServer | Yes | FencingServer | Service address of fencing |
| 2 | maxLon | Yes | BigDecimal | Maximum longitude of fencing |
| 3 | minLon | Yes | BigDecimal | Minimum longitude of fencing |
| 4 | maxLat | Yes | BigDecimal | Maximum latitude of fencing |
| 5 | minLat | Yes | BigDecimal | Minimum latitude of fencing |

**Table 4 DF_FencingServer**

| No. | Data element | Is it mandatory | Type | Note |
|---|---|---|---|---|
| 1 | authServer | Yes | String | Registration authorization address (domain name/IP:PORT) |
| 2 | vehicleServer | Yes | String | Navigator communication address (domain name/IP:PORT) |

In step S203, the vehicle intelligent terminal platform submits a service vehicle registration application to the regional/edge cloud control platform.

The vehicle/vehicle intelligent terminal platform calls a navigator registration interface of the regional cloud control platform and a navigator registration interface of the edge cloud control platform, and submits a registration application of a navigator in this region.

In step S204, the regional/edge cloud control platform returns a terminal registration application result.

The regional cloud control platform and the edge cloud control platform returns the registration application result to the vehicle/vehicle intelligent terminal platform to complete the registration application of the vehicle in the region.

According to some embodiments, the vehicle registration process may meet the following requirements:
a) Communication protocol: HTTP/HTTPS;
b) Requirement for a transmission format: JSON or Protocol Buffer; and
c) Encoding format requirement: UTF-8.

According to some embodiments, data returned in step S204 are shown in Table 5 below.

**Table 5 Return data for the vehicle registration application**

| No. | Data element | Is it mandatory | Type | Note |
|---|---|---|---|---|
| 1 | timestamp | No | String | Request/response timestamp in the format yyyyMMddHHmmssSSS |
| 2 | status | Yes | Integer | Status code: 200: Succeeded; 304: Registered; 400: Parameter error; 401: No permission; and 500: The service is abnormal |
| 3 | oemCode | Yes | String | Unique identification number of a vehicle platform |
| 4 | vehicleId | Yes | String | The vehicle/terminal device No. is a hexadecimal number, that is, each character may only be 0-f. |
| 5 | mac | No | String | Mac address: a 32-bit Max address is automatically generated if a Mac address is null. |
| 6 | vin | No | String | VIN number of the vehicle |
| 7 | mdn | No | String | MDN number of the vehicle |
| 8 | brand | No | String | Brand of the vehicle |
| 9 | licenseNumber | No | String | License plate number |
| 10 | manufacturer | No | String | Manufacturer |
| 11 | model | No | String | Model of the vehicle |
| 12 | networkLink | No | Integer | Networking manner: 1: 4G; 2: 5G; and 3: V2X. |
| 13 | grade | No | String | Grade of autonomous driving: L0, L1, L2, L3, L4, and L5. |
| 14 | category | No | Integer | Vehicle category: 1: Network-linked aided driving vehicle; and 2: Autonomous vehicle |

In step S205, the vehicle intelligent terminal platform applies to the regional/edge cloud control platform for terminal authorization and authentication.

In step S206, an encryption key and a terminal token are returned.

The vehicle/vehicle intelligent terminal platform invokes an authorization and authentication interface of the regional/edge cloud control platform to obtain an AES encryption key and a vehicle token (i.e., terminal token). The vehicle token is a token corresponding to the vehicle intelligent terminal. The AES encryption key may be a key used by the vehicle intelligent terminal to encrypt the vehicle token and decrypt a cloud control platform token.

According to some embodiments, the vehicle authorization and authentication process should meet the following requirements:
a) Communication protocol: HTTP/HTTPS;
b) Requirement for a transmission format: JSON or Protocol Buffer; and
c) Encoding format requirement of JSON format data: UTF-8.

According to some embodiments, data returned in step S206 are shown in Tables 6 to 7 below.

**Table 6 Request data for vehicle authorization and authentication**

| No. | Data element | Is it mandatory | Type | Note |
|---|---|---|---|---|
| 1 | oemCode | Yes | String | Unique identification number of a vehicle platform |
| 2 | vehicleId | No | String | The vehicle number: vehicleId is required to obtain the token. |
| 3 | type | Yes | Integer | Request type: 0: Obtain the token and the key; 1: Obtain the token; and 2: Obtain the key |
| 4 | refreshKey | No | Integer | Whether to refresh the AES key: 0: No; and 1: Yes. The default value is 0. |
| 5 | timestamp | Yes | String | Request timestamp in a format: yyyyMMddHHmmssSSS |

**Table 7 Return data for vehicle authorization and authentication**

| No. | Data element | Is it mandatory | Type | Note |
|---|---|---|---|---|
| 1 | status | Yes | Integer | 200: Succeeded; 400: Parameter error; 01: no permission; and 500: The service is abnormal |
| 2 | response Time | No | String | Response timestamp in the format yyyyMMddHHmmssSSS. |
| 3 | token | No | String | 1) For the requested token, the terminal should re-request a new token before the token validity deadline arrives. |
| | | | | 2) The validity period of the token is in days, and the default is 1 day. Every time a token is applied for, an auth module may not check whether an old token has expired, but may generate a new token. The validity period is the current time when the request is received + the validity period. |
| | | | | 3) Each terminal may have its own independent token. |
| | | | | 4) The token is an 8-bit string. A token in a BSM reported by the navigator is a 4-bit string, and DecodeHex is required for the token. |
| 4 | tokenExpireTime | No | String | Token expire timestamp in the format yyyyMMddHHmmssSSS |
| 5 | key | No | String | 1) The AES encryption key, using 16-bit UUID. |
| | | | | 2) The validity period is in days. The default value is 2 days. Please refresh the key before expiration or obtain a new key after expiration. |
| | | | | 3) All vehicles of the same vehicle platform in the same city share the same AES key. |
| | | | | 4) The AES padding manner is AES/CBC/PKCS5Padding. |
| 6 | keyExpireTime | No | String | Key expire timestamp in the format yyyyMMddHHmmssSSS |

In step S207, the vehicle intelligent terminal platform delivers the encryption key and the terminal token to the vehicle intelligent terminal.

The vehicle/vehicle intelligent terminal platform delivers the received AES encryption key and vehicle token to the vehicle under its jurisdiction.

In step S208, the vehicle intelligent terminal sends location information to the regional/edge cloud control platform via cellular communication.

When the vehicle enters the geo-fence range, the vehicle intelligent terminal may actively report location data to the regional cloud control platform and the edge cloud control platform, so that the regional cloud control platform and the edge cloud control platform may obtain the location information of the vehicle. The vehicle intelligent terminal may choose to report data to some non-central cloud control platforms according to a current location, and may also report data to all non-central cloud control platforms within a current geo-fence, and the non-central cloud control platforms determine whether to return the data to the vehicle intelligent terminal.

According to some embodiments, the vehicle intelligent terminal has the BSM data reporting capability, and thus may send the location information to the cloud control platform by reporting the BSM data. The data reporting process should meet the following requirements:
a) Communication protocol: UDP;
b) Reporting frequency: 10 Hz;
c) Header is plaintext, and Body is ciphertext; and
d) Data encoding format requirement: UTF-8.

According to some embodiments, the location information data reported by the vehicle are shown in Table 8.

**Table 8 Message content reported by the terminal (based on the BSM)**

| No. | Data element | Is it mandatory | Number of bytes | Note |
|---|---|---|---|---|
| 1 | oemCode | Yes | 8Byte | Unique identification number of a vehicle platform |
| 2 | upVersion | Yes | 2Byte | Standard version number of a reported message: |
| | | | | 0: T/CSAE 0053-2017; |
| | | | | 1: T/CSAE 0053-2020; |
| | | | | 2: YD/T 3709-2020. |
| 3 | downVersion | Yes | 2Byte | Standard version number of a delivered message: |
| | | | | 0: T/CSAE 0053-2017; |
| | | | | 1: T/CSAE 0053-2020; |
| | | | | 2: YD/T 3709-2020. |
| 4 | UUID | Yes | 32Byte | Universal unique identifier, 32 bytes |
| 5 | BSM | Yes | | a BSM message (the standard version may be determined based on actual application requirements) |
| 6 | token | No | 4Byte | The token may be used as an extension field of the BSM message to check the validity of the device (token OCTET STRING (SIZE(4)) OPTIONAL is added to a BSM.asn code). OCTET STRING (SIZE(4)) (the token received by an AUTH message is converted to decimal data and put into OCTET STRING (SIZE(4))) |

According to some embodiments, the vehicle intelligent terminal does not have the BSM data reporting capability, and the data reporting process should meet the following requirements:
a) Communication protocol: UDP or WebSocket;
b) Reporting frequency: not less than 2 Hz;
c) Header is plaintext, Body is ciphertext;
d) Encoding format requirement of JSON format data: UTF-8.

According to some embodiments, the content of the location information that may be sent to the cloud control platform is shown in Table 9.

**Table 9 Message content reported by the terminal (not based on the BSM)**

| No. | Data element | Is it mandatory | Type | Note |
|---|---|---|---|---|
| 1 | deviceId | Yes | String | Terminal number |
| 2 | platformCode | Yes | String | ID code of a platform to which the terminal belongs |
| 3 | heading | Yes | Double | Heading Angle, 1-360 degrees |
| 4 | secMark | Yes | Integer | Timestamp |
| 5 | longitude | Yes | Double | Longitude |
| 6 | latitude | Yes | Double | Latitude |
| 7 | aesKey | Yes | String | The AES key, obtained by calling an Auth interface |
| 8 | token | No | String | The terminal token, obtained by calling the Auth interface |

In step S209, the regional/edge cloud control platform delivers the data to the terminal.

The regional cloud and edge cloud control platforms deliver relevant V2X message data or other forms of data for aided driving or autonomous driving (for example, roadside information) to the vehicle intelligent terminal.

According to some embodiments, the vehicle intelligent terminal has the capacity to analyze V2X data such as MAP. The V2X message data such as MAP and SPAT may be delivered to the vehicle intelligent terminal via the cloud control platform. The data delivery process should meet the following requirements:
a) Communication protocol: UDP;
b) Delivery frequency: 10 Hz;
c) Header is plaintext, Body is ciphertext;
d) Data encoding format requirement: UTF-8.

The relevant V2X message data may also meet the requirements of YD/T 3709, T/ITS 0058, T/ITS 0118, T/ITS 0135 or T/CSAE 0053 and related standards.

According to some embodiments, the message content delivered by the cloud control platform is shown in Table 10.

**Table 10 Message content delivered by the cloud control platform**

| No. | Data element | Is it mandatory | Number of bytes | Note |
|---|---|---|---|---|
| 1 | oemCode | Yes | 8Byte | Unique identification number of a vehicle platform |
| 2 | upVersion | Yes | 2Byte | Standard version number of a reported message: |
| | | | | 0: T/CSAE 0053-2017; |
| | | | | 1: T/CSAE 0053-2020; |
| | | | | 2: YD/T 3709-2020. |
| 3 | downVersion | Yes | 2Byte | Standard version number of a delivered message: |
| | | | | 0: T/CSAE 0053-2017; |
| | | | | 1: T/CSAE 0053-2020; |
| | | | | 2: YD/T 3709-2020. |
| 4 | UUID | Yes | 32Byte | Universal unique identifier, 32 bytes |
| 5 | MAP | No | | A MAP message (the standard version may be determined according to actual application requirements) |
| 6 | SPAT | No | | A SPAT message (the standard version may be determined according to actual application requirements) |
| 7 | RSI | No | | An RSI message (the standard version may be determined according to actual application requirements) |
| ... | ... | ... | ... | ... |
| 8 | token | No | 4Byte | The token may be used as an extension field of V2X messages such as MAP, SPAT, and RSI. Taking MAP as an example, token OCTET STRING (SIZE(4)) OPTIONAL) is added to the MAP.asn code. OCTET STRING (SIZE(4)) (The token received by the AUTH message is converted into decimal data and put into OCTET STRING (SIZE(4))) |

According to some embodiments, the vehicle intelligent terminal does not have the capacity to analyze V2X data such as MAP, and the data sending process should meet the following requirements:
a) Communication protocol: UDP or WebSocket;
b) Reporting frequency: not less than 2 Hz;
c) Header is plaintext, Body is ciphertext;
d) Encoding format requirement of JSON format data: UTF-8.

According to some embodiments, the message content sent by the cloud control platform is shown in Table 11.

**Table 11 Message content sent by the cloud control platform to the terminal**

| No. | Data element | Is it mandatory | Type | Note |
|---|---|---|---|---|
| 1 | deviceId | Yes | String | Terminal number |
| 2 | platformCode | Yes | String | The ID code of a platform to which the terminal belongs |
| 3 | Data | No | | The data may be data such as signal lights, traffic events, and traffic operation conditions (see T/ITS 0180.1-2021 and T/ITS 0180.2-2021), and may also be other data. |

According to some embodiments, after establishing effective connectivity with the vehicle intelligent terminal, the non-central cloud control platform may provide data sharing services to the vehicle intelligent terminal, and the content of the sent data includes but is not limited to:
a) Traffic event information;
b) Traffic operation status information;
c) Information of traffic participants near the vehicle;
d) Signal light information;
e) Traffic weather information;
f) Map information;
g) Information on traffic signs and signage;
h) Other relevant information.

The data sent by the cloud control platform to the vehicle intelligent terminal may be applied to vehicle-road collaboration application scenarios determined by standards such as T/ITS 0058, T/ITS 0118, and T/ITS 0135, and provide data services for the realization of the scenarios. The related scenarios that may be implemented are shown in Table 12 below.

**Table 12 Application scenarios that may be implemented in an aided mode**

| No. | Scenario source | Name(s) of application scenarios | V2X communication manner | A V2X message set that the cloud control platform may send |
|---|---|---|---|---|
| 1 | Newly added | Green light start reminder | V2N | SPAT, MAP |
| 2 | T/ITS 0058 | Forward collision warning | V2N | BSM, MAP, SPAT, RSI, RSM |
| 3 | | Intersection collision warning | V2N | |
| 4 | | Left turn aid | V2N | |
| 5 | | Blind spot warning | V2N | |
| 6 | | Reverse overtaking warning | V2N | |
| 7 | | Road hazardous situation alert | V2N | |
| 8 | | Speed limit warning | V2N | |
| 9 | | Red light warning | V2N | |
| 10 | | Collision warning for vulnerable traffic participants | V2N | |
| 11 | | Green wave speed guide | V2N | |
| 12 | | In-car signage | V2N | |
| 13 | | Traffic jam ahead reminder | V2N | |
| 14 | | Emergency vehicle reminder | V2N | |
| 15 | T/ITS 0118 | Traffic participant perception sharing | V2N | MAP, PAM, PMM, TPM, VPM, PSM, RSC, RTCM, SSM, VIR, TEST, PAM, PMM, TPM |
| 16 | | Dynamic lane management | V2N | |
| 17 | | Special vehicle priority | V2N | |
| 18 | | Road abnormality reminder | V2N | |
| 19 | | Floating car data collection | V2N | |
| 20 | | Slow traffic warning | V2N | |
| 21 | T/ITS 0135 | Collaborative perception | V2N | BSM, CIM, RAM, RSC, RSCV, SSM |
| 22 | | "Zombie car" recognition of roadside perception | V2N | |
| 23 | | Traffic situation recognition of roadside perception | V2N | |
| 24 | | Abnormal driving behavior recognition of collaborative perception | V2N | |

It can be understood that the above is only an exemplary overall service flow of the system for vehicle-road collaboration, where some of the steps and obtaining of some information in the steps can be omitted, or more steps can be added or more abundant information may be obtained and transmitted on the basis of the above flow, which is not limited here.

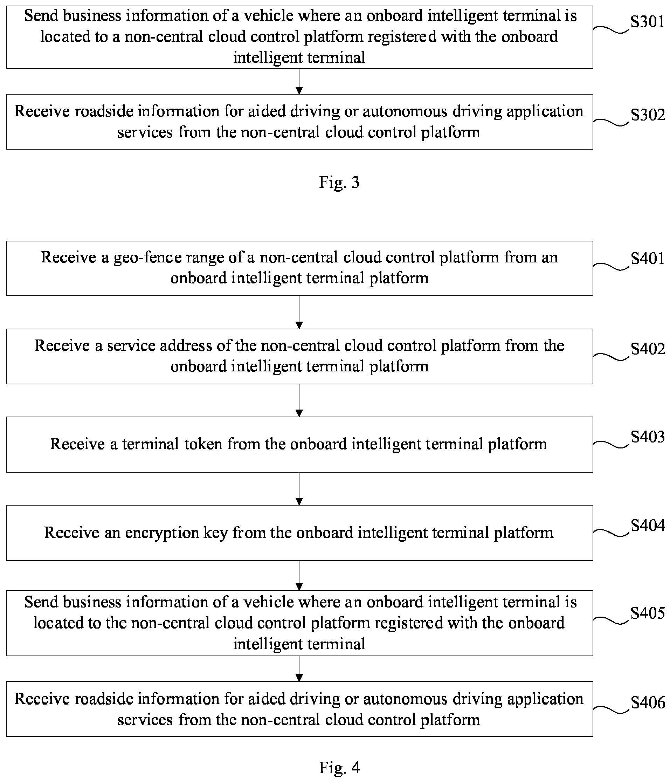

According to one aspect of the present disclosure, a method for vehicle-road collaboration is provided, and applied to a vehicle intelligent terminal. As shown in Fig. 3, the method includes: step S301, service information of a vehicle where the vehicle intelligent terminal is located is sent to a non-central cloud control platform registered with the vehicle intelligent terminal; and step S302, roadside information for aided driving or autonomous driving application services is received from the non-central cloud control platform.

Thus, by performing information interaction with the non-central cloud control platform registered with the vehicle where the vehicle intelligent terminal is located, to receive the roadside information for the aided driving or autonomous driving application services, aided driving or autonomous driving services may be provided for a vehicle intelligent terminal that does not support direct connection to a road side unit, thereby reducing requirements for the vehicle intelligent terminal and roadside infrastructure, and strengthening and improving the comprehensive technical capability of vehicle-road-cloud collaborative information interaction.

According to some embodiments, communication between the vehicle intelligent terminal and the non-central cloud control platform may be performed via a cellular network, that is, information interaction is executed by means of Uu communication via V2N. It can be understood that the vehicle intelligent terminal may also perform information interaction with the non-central cloud control platform via a road side unit (RSU) in the form of PC5 communication, which is not limited here.

According to some embodiments, as shown in Fig. 4, the method for vehicle-road collaboration may further include: step S401, receiving a geo-fence range of the non-central cloud control platform from a vehicle intelligent terminal platform. Steps S405 to S406 in Fig. 4 are similar to steps S301 to S302 in Fig. 3, which will not be repeated here.

According to some embodiments, as shown in Fig. 4, the method for vehicle-road collaboration may further include: step S402, a service address of the non-central cloud control platform is received from the vehicle intelligent terminal platform. As described above, a service address of a cloud control platform may include, for example, an address for registration authorization and an address for communication with the vehicle intelligent terminal, and thus the vehicle intelligent terminal may receive an address of the cloud control platform for communication with the terminal from the vehicle intelligent terminal platform.

It can be understood that the geo-fence range and service address of the non-central cloud control platform may also be pre-stored in the vehicle intelligent terminal, so that there is no need to additionally obtain the geo-fence range and the service address from the vehicle intelligent terminal platform.

According to some embodiments, the service information may include location information of the vehicle, including at least one of the longitude, the latitude, or the heading angle of the vehicle. In one example, the service information may include, for example, BSM data.

According to some embodiments, as shown in Fig. 4, the method for vehicle-road collaboration may further include: step S403, a terminal token is received from the vehicle intelligent terminal platform. The terminal token uniquely corresponds to the vehicle intelligent terminal. The terminal token is the identity certificate of the vehicle intelligent terminal, and may be sent to the non-central cloud control platform for check. In some embodiments, the service information (such as the BSM data) may include an extension field. The extension field may include the above terminal token.

According to some embodiments, as shown in Fig. 4, the method for vehicle-road collaboration may further include: step S404, a key is received from the vehicle intelligent terminal platform. The key is shared by all vehicle intelligent terminals connected to the vehicle intelligent terminal platform. As described above, the key may be used by the vehicle intelligent terminal to encrypt data that need to be sent to the non-central cloud control platform (for example, the terminal token), and may also be used to decrypt data received from the non-central cloud control platform (for example, a token of the non-central cloud control platform).

According to some embodiments, step S405, that is, the report data are sent to the non-central cloud control platform registered with the vehicle intelligent terminal via cellular communication may include: in response to determining that the vehicle is located within the geo-fence range of the non-central cloud control platform, the report data are sent to the non-central cloud control platform via cellular communication. Thus, when the vehicle is located within the geo-fence of the non-central cloud control platform, the aided driving or autonomous driving services provided by the non-central cloud control platform can be used.

It can be understood that there may be only one or a plurality of non-central cloud control platforms registered with vehicle intelligent terminals, which is not limited here.

The roadside information may be, for example, roadside information collected by a road side unit within the geo-fence range of the non-central cloud control platform.

According to some embodiments, the vehicle intelligent terminal may have a V2X data analysis capability. The roadside information may include V2X messages. Thus, the non-central cloud control platform may use various V2X messages to deliver service data that meet the above standards to the vehicle intelligent terminal.

In some embodiments, the V2X messages may include at least one of a MAP message, a signal phase and timing message (SPAT) message, a road side information (RSI) message, or a road side message (RSM). It can be understood that the V2X messages may also include other messages that provide roadside information for aided driving or autonomous driving application services.

In some embodiments, roadside information including a V2X message may include a V2X message extension field. The V2X message extension field may include a cloud control platform token corresponding to the non-central cloud control platform. The cloud control platform token may be decrypted with the key to complete the check.

According to other embodiments, the vehicle intelligent terminal may not have the V2X data analysis capability. The roadside information may directly include at least one of data about signal lights, data about traffic events, or data about traffic operation conditions. Thus, in the case that the vehicle intelligent terminal does not have the V2X data analysis capability, the service data for aided driving or automatic driving may be directly received from the non-central cloud control platform.

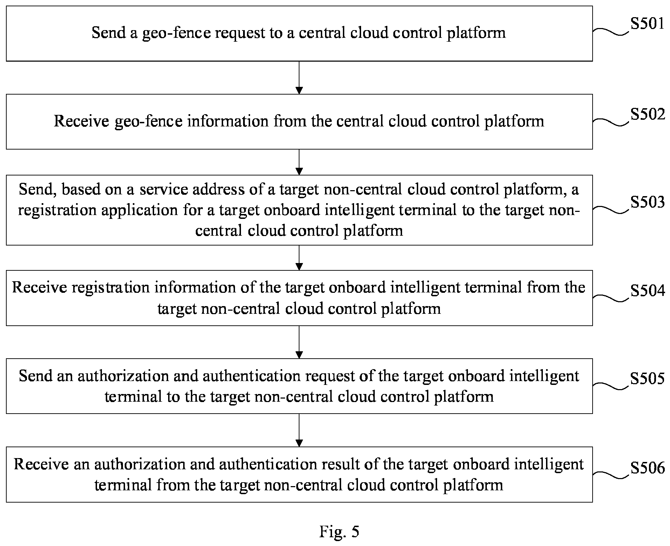

According to another aspect of the present disclosure, a method for vehicle-road collaboration is provided, and applied to a vehicle intelligent terminal platform. As shown in Fig. 5, the method includes: step S501, a geo-fence request is sent to a central cloud control platform; step S502, geo-fence information is received from the central cloud control platform, the geo-fence information including a service address of a target non-central cloud control platform; step S503, a registration application for a target vehicle intelligent terminal is sent to the target non-central cloud control platform based on the service address of the target non-central cloud control platform; step S504, registration information of the target vehicle intelligent terminal is received from the target non-central cloud control platform; step S505, an authorization and authentication request of the target vehicle intelligent terminal is sent to the target non-central cloud control platform; and step S506, an authorization and authentication result of the target vehicle intelligent terminal is received from the target non-central cloud control platform. Thus, by completing the registration, authorization and authentication of the target vehicle intelligent terminal to the non-central cloud control platform, the target vehicle intelligent terminal may receive service data for aided driving or autonomous driving from the non-central cloud control platform.

According to some embodiments, the registration information may include at least one of the following: information indicating whether the target vehicle intelligent terminal is successfully registered; information for identifying the vehicle intelligent terminal platform; information for identifying the target vehicle intelligent terminal; information of a target vehicle where the target vehicle intelligent terminal is located; a networking manner of the target vehicle intelligent terminal, the networking manner including at least one of 4G, 5G, or V2X; an autonomous driving grade of the target vehicle; and a category of the target vehicle, the category including at least one of a network-linked aided driving vehicle or an autonomous vehicle.

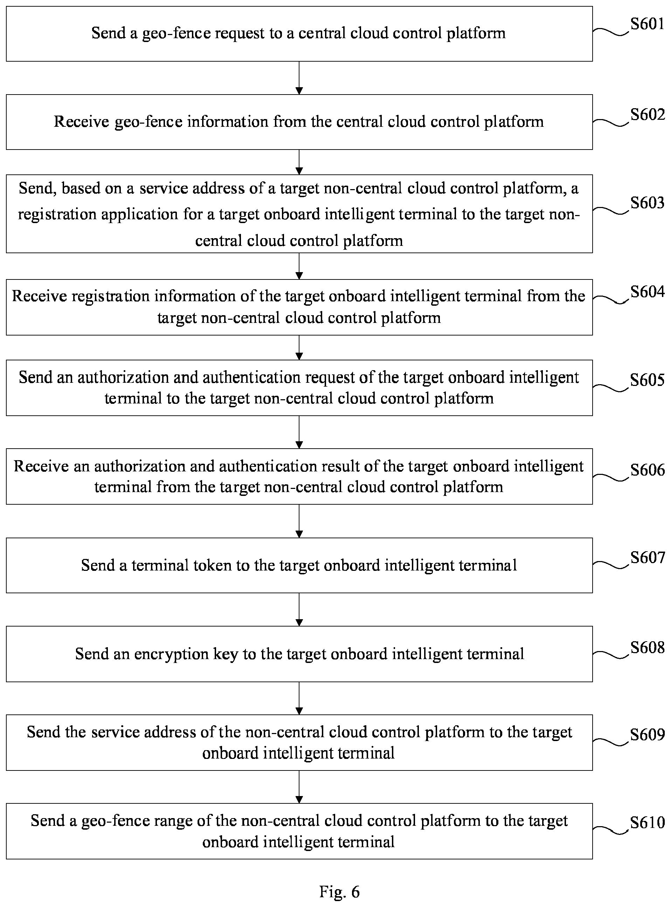

According to some embodiments, the authorization and authentication request may indicate to obtain a terminal token for the target vehicle intelligent terminal. The terminal token may uniquely correspond to the target vehicle intelligent terminal. The authorization and authentication result may include one of the terminal token and information indicating an authorization failure. As shown in Fig. 6, the method for vehicle-road collaboration may further include: step S607, the terminal token is sent to the target vehicle intelligent terminal. Steps S601 to S606 in Fig. 6 are similar to steps S501 to S506 in Fig. 5, which will not be repeated here.

According to some embodiments, the authorization and authentication request may indicate to obtain a key shared by all vehicle intelligent terminals connected to the vehicle intelligent terminal platform. The authorization and authentication result may include one of the key and information indicating an authorization failure. As shown in Fig. 6, the method for vehicle-road collaboration may further include: step S608, the key is sent to the target vehicle intelligent terminal.

According to some embodiments, as shown in Fig. 6, the method for vehicle-road collaboration may further include: step S609, the service address of the target non-central cloud control platform is sent to the target vehicle intelligent terminal.

According to some embodiments, the geo-fence information may further include a geo-fence range of the target non-central cloud control platform. As shown in Fig. 6, the method for vehicle-road collaboration may further include: step S610, the geo-fence range of the target non-central cloud control platform is sent to the target vehicle intelligent terminal.

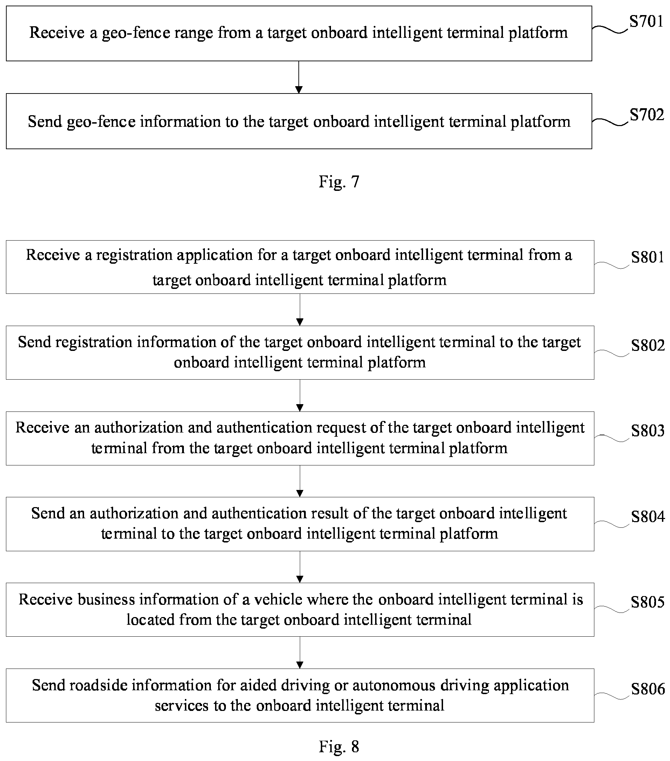

According to yet another aspect of the present disclosure, a method for vehicle-road collaboration is provided, and applied to a central cloud control platform. As shown in Fig. 7, the method includes: step S701, a geo-fence request is received from a target vehicle intelligent terminal platform; and step S702, geo-fence information is sent to the target vehicle intelligent terminal platform, the geo-fence information including a service address of a target non-central cloud control platform. Thus, through the collaboration between the central cloud control platform and the non-central cloud control platform, the pressure of data processing of the central cloud control platform can be reduced, and by setting a regional/edge cloud control platform, the response speed of the cloud control platform to a service request of the vehicle intelligent terminal can be improved, and the service quality of aided driving and autonomous driving is improved.

According to yet another aspect of the present disclosure, a method for vehicle-road collaboration is provided, and applied to a non-central cloud control platform. As shown in Fig. 8, the method includes: step S801, a registration application for a target vehicle intelligent terminal is received from a target vehicle intelligent terminal platform; step S802, registration information of the target vehicle intelligent terminal is sent to the target vehicle intelligent terminal platform; step S803, an authorization and authentication request of the target vehicle intelligent terminal is received from the target vehicle intelligent terminal platform; step S804, an authorization and authentication result of the target vehicle intelligent terminal is sent to the target vehicle intelligent terminal platform; step S805, service information of a vehicle where the vehicle intelligent terminal is located is received from the target vehicle intelligent terminal; and step S806, roadside information for aided driving or autonomous driving application services is sent to the vehicle intelligent terminal.

Thus, by collaborating with the vehicle intelligent terminal platform to complete the registration, authorization and authentication of the target vehicle intelligent terminal, the target vehicle intelligent terminal can receive the roadside information for the aided driving or autonomous driving application services from the non-central cloud control platform. By performing information interaction with the vehicle intelligent terminal that has been successfully registered, authorized and authenticated, and sending the roadside information for the aided driving or autonomous driving application services, aided driving or autonomous driving services may be provided for a vehicle intelligent terminal that does not support direct connection to a road side unit, thereby reducing requirements for the vehicle intelligent terminal and roadside infrastructure, and strengthening and improving the comprehensive technical capability of vehicle-road-cloud collaborative information interaction.

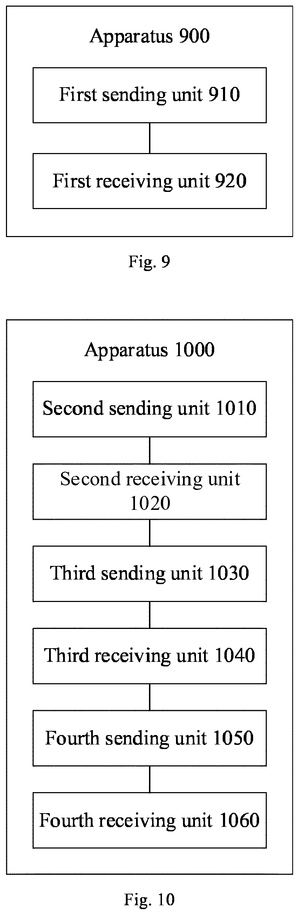

According to yet another aspect of the present disclosure, an apparatus for vehicle-road collaboration is provided, and applied to a vehicle intelligent terminal. As shown in Fig. 9, the apparatus 900 includes: a first sending unit 910, configured to send service information of a vehicle where the vehicle intelligent terminal is located to a non-central cloud control platform registered with the vehicle intelligent terminal; and a first receiving unit 920, configured to receive roadside information for aided driving or autonomous driving application services from the non-central cloud control platform.

It can be understood that the operations of the units 910 and 920 in the apparatus 900 are similar to the operations of steps S301 and S302 in Fig. 3, which will not be repeated here.

According to yet another aspect of the present disclosure, an apparatus for vehicle-road collaboration is provided, and applied to a vehicle intelligent terminal platform. As shown in Fig. 10, the apparatus 1000 includes: a second sending unit 1010, configured to send a geo-fence request to a central cloud control platform; a second receiving unit 1020, configured to receive geo-fence information from the central cloud control platform, the geo-fence information including a service address of a target non-central cloud control platform; a third sending unit 1030, configured to send, based on the service address of the target non-central cloud control platform, a registration application for a target vehicle intelligent terminal to the target non-central cloud control platform; a third receiving unit 1040, configured to receive registration information of the target vehicle intelligent terminal from the target non-central cloud control platform; a fourth sending unit 1050, configured to send an authorization and authentication request of the target vehicle intelligent terminal to the target non-central cloud control platform; and a fourth receiving unit 1060, configured to receive an authorization and authentication result of the target vehicle intelligent terminal from the target non-central cloud control platform.

It can be understood that the operations of the units 1010 to 1060 in the apparatus 1000 are similar to the operations of steps S501 to S506 in Fig. 5, which will not be repeated here.

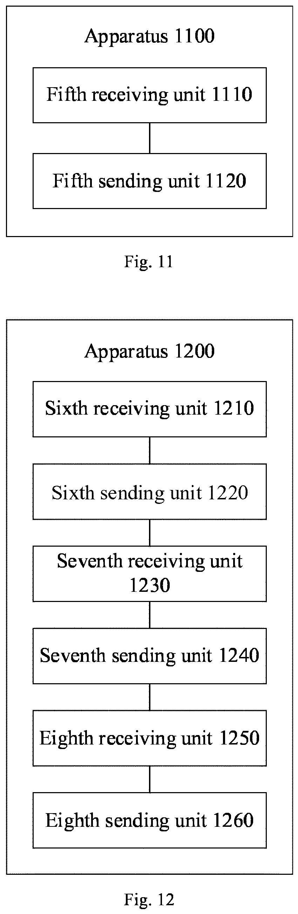

According to yet another aspect of the present disclosure, an apparatus for vehicle-road collaboration is provided, and applied to a central cloud control platform. As shown in Fig. 11, the apparatus 1100 includes: a fifth receiving unit 1110, configured to receive a geo-fence request from a target vehicle intelligent terminal platform; and a fifth sending unit 1120, configured to send geo-fence information to the target vehicle intelligent terminal platform, the geo-fence information including a service address of a target non-central cloud control platform.

It can be understood that the operations of the units 1110 and 1120 in the apparatus 1100 are similar to the operations of steps S701 and S702 in Fig. 7, which will not be repeated here.

According to yet another aspect of the present disclosure, an apparatus for vehicle-road collaboration is provided, and applied to a non-central cloud control platform. As shown in Fig. 12, the apparatus 1200 includes: a sixth receiving unit 1210, configured to receive a registration application for a target vehicle intelligent terminal from a target vehicle intelligent terminal platform; a sixth sending unit 1220, configured to send registration information of the target vehicle intelligent terminal to the target vehicle intelligent terminal platform; a seventh receiving unit 1230, configured to receive an authorization and authentication request of the target vehicle intelligent terminal from the target vehicle intelligent terminal platform; a seventh sending unit 1240, configured to send an authorization and authentication result of the target vehicle intelligent terminal to the target vehicle intelligent terminal platform; an eighth receiving unit 1250, configured to receive service information of a vehicle where the target vehicle intelligent terminal is located from the target vehicle intelligent terminal; and an eighth sending unit 1260, configured to send roadside information for aided driving or autonomous driving application services to the target vehicle intelligent terminal.

It can be understood that the operations of the units 1210 to 1260 in the apparatus 1200 are similar to the operations of steps S801 to S806 in Fig. 8, which will not be repeated here.

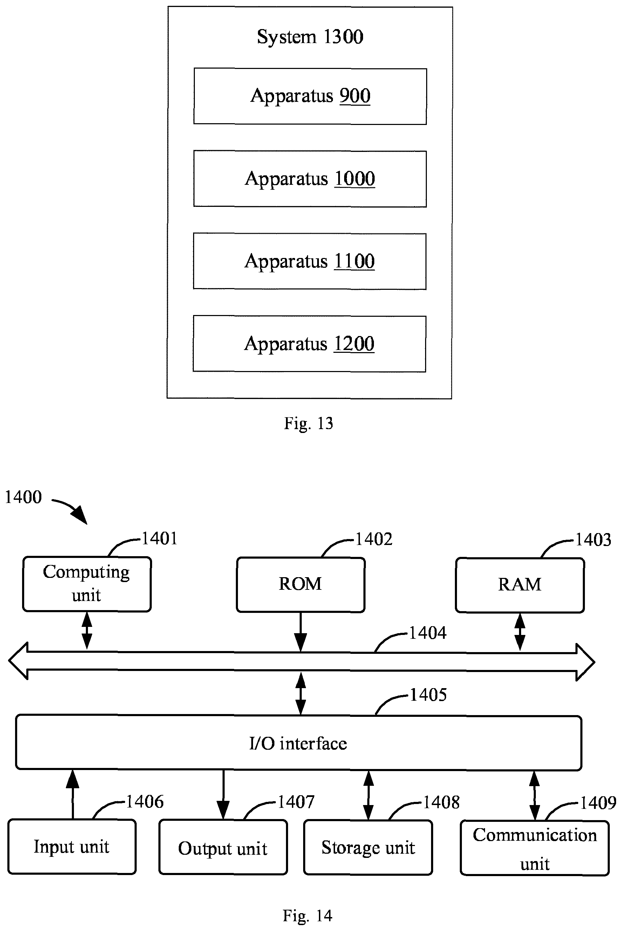

According to yet another aspect of the present disclosure, a system for vehicle-road collaboration is provided. As shown in Fig. 13, the system includes: the apparatus 900; the apparatus 1000; the apparatus 1100; and the apparatus 1200.

According to yet another aspect of the present disclosure, a data structure is provided for geo-fence information returned by a central cloud control platform in response to receiving a geo-fence request from a vehicle intelligent terminal platform. The data structure includes: a field for identifying the vehicle intelligent terminal platform; and a city list, including at least one city element. The city element includes: a field for identifying a city; and a list of geo-fences included in the city, including at least one geo-fence element. The geo-fence element includes: a field for a geo-fence range; and a field for a fence service address, including a field for registration and authorization address and a field for a navigator communication address.

According to yet another aspect of the present disclosure, a data structure is provided for registration information returned by a non-central cloud control platform in response to receiving a registration application for a target vehicle intelligent terminal from a vehicle intelligent terminal platform. The data structure includes: a field for indicating whether the target vehicle intelligent terminal is successfully registered; a field for identifying the vehicle intelligent terminal platform; and a field for identifying the target vehicle intelligent terminal.

According to yet another aspect of the present disclosure, a data structure is provided for an authorization and authentication request for a target vehicle intelligent terminal sent by a vehicle intelligent terminal platform to a non-central cloud control platform. The data structure includes: a field for identifying the vehicle intelligent terminal platform; a field for indicating to obtain a terminal token of the target vehicle intelligent terminal, or to obtain a key shared by all vehicle intelligent terminals connected to the vehicle intelligent terminal platform, or to obtain the terminal token and the key, the terminal token uniquely corresponding to the target vehicle intelligent terminal; and a field for a timestamp.

According to yet another aspect of the present disclosure, a data structure is provided for an authorization and authentication result returned by a non-central cloud control platform in response to receiving an authorization and authentication request for a target vehicle intelligent terminal from a vehicle intelligent terminal platform. The data structure includes: at least one of a field for indicating whether the authorization and authentication are successful, a field for indicating a terminal token of the target vehicle intelligent terminal, or a field for indicating a key shared by all vehicle intelligent terminals connected to the vehicle intelligent terminal platform. The terminal token uniquely corresponds to the target vehicle intelligent terminal.

According to yet another aspect of the present disclosure, a data structure is provided for service information, sent by a vehicle intelligent terminal to a non-central cloud control platform, of a vehicle where the vehicle intelligent terminal is located. The data structure includes: a field for identifying a vehicle intelligent terminal platform; a field for indicating a standard version number of a reported message; a field for indicating a standard version number of a delivered message; a field for a universal unique identifier; and a field for the reported message.

According to yet another aspect of the present disclosure, a data structure is provided for service information, sent by a vehicle intelligent terminal to a non-central cloud control platform, of a vehicle where the vehicle intelligent terminal is located. The data structure includes: a field for identifying the vehicle intelligent terminal; a field for identifying a vehicle intelligent terminal platform; a field for describing at least one of motion information or location information of the vehicle; a field for a timestamp; and a field for indicating a key shared by all vehicle intelligent terminals connected to the vehicle intelligent terminal platform.

According to yet another aspect of the present disclosure, a data structure is provided for roadside information returned by a non-central cloud control platform in response to receiving service information from a vehicle intelligent terminal. The data structure includes: a field for identifying a vehicle intelligent terminal platform; a field for indicating a standard version number of a reported message; a field for indicating a standard version number of a delivered message; a field for a universal unique identifier; and a field for the delivered message.

According to yet another aspect of the present disclosure, a data structure is provided for roadside information returned by a non-central cloud control platform in response to receiving service information from a vehicle intelligent terminal. The data structure includes: a field for identifying the vehicle intelligent terminal; a field for identifying a vehicle intelligent terminal platform; and a field for delivered data. The delivered data include at least one of data about signal lights, data about traffic events, or data about traffic operation conditions.

In the technical solution of the present disclosure, obtaining, storage, application, etc. of involved personal information of users comply with the provisions of relevant laws and regulations, and do not violate public order and good customs.

According to an embodiment of the present disclosure, an electronic device, a readable storage medium, and a computer program product are further provided.

According to embodiments of the present disclosure, a vehicle intelligent terminal, a vehicle, a vehicle intelligent terminal platform, a central cloud control platform, a non-central cloud control platform, and a system for vehicle-road collaboration are further provided.

Optionally, the cloud control platform performs processing in the cloud to perform image and video processing and data computing. The cloud control platform may also be referred to as a vehicle-road collaborative management platform, a V2X platform, a cloud computing platform, a central system, a cloud server, and the like.

Referring to Fig. 14, a structural block diagram of an electronic device 1400 that may serve as a server or a client of the present disclosure will now be described, and it is an example of a hardware device that may be applied to various aspects of the present disclosure. The electronic device is intended to represent various forms of digital electronic computer devices, such as, a laptop computer, a desktop computer, a workstation, a personal digital assistant, a server, a blade server, a mainframe computer, and other suitable computers. The electronic device may further represent various forms of mobile apparatuses, such as, personal digital processing, a cell phone, a smart phone, a wearable device and other similar computing apparatuses. The components shown herein, their connections and relationships, and their functions are merely used as examples, and are not intended to limit the implementations of the present disclosure described and/or required herein.

As shown in Fig. 14, the electronic device 1400 includes a computing unit 1401 that may perform various appropriate actions and processing according to computer programs stored in a read-only memory (ROM) 1402 or computer programs loaded from a storage unit 1408 into a random access memory (RAM) 1403. In the RAM 1403, various programs and data required for operations of the electronic device 1400 may further be stored. The computing unit 1401, the ROM 1402 and the RAM 1403 are connected to one another via a bus 1404. An input/output (I/O) interface 1405 is also connected to the bus 1404.

A plurality of components in the electronic device 1400 are connected to the I/O interface 1405, including: an input unit 1406, an output unit 1407, a storage unit 1408, and a communication unit 1409. The input unit 1406 may be any type of device capable of inputting information to the electronic device 1400. The input unit 1406 may receive input digital or character information and generate key signal input related to user settings and/or function control of the electronic device, and may include but not limited to a mouse, a keyboard, a touch screen, a trackpad, a trackball, a joystick, a microphone and/or a remote control. The output unit 1407 may be any type of device capable of presenting information, and may include but not limited to a display, a speaker, a video/audio output terminal, a vibrator and/or a printer. The storage unit 1408 may include but not limited to a magnetic disk and an optical disk. The communication unit 1409 allows the electronic device 1400 to exchange information/data with other devices via computer networks such as the Internet and/or various telecommunication networks, and may include but not limited to a modem, a network card, an infrared communication device, a wireless communication transceiver and/or a chipset, such as a Bluetooth TM device, a 802.11 device, a WiFi device, a WiMax device, a cellular communication device and/or the like.

The computing unit 1401 may be various general-purpose and/or special-purpose processing components with processing and computing capabilities. Some examples of the computing unit 1401 include but not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, etc. The computing unit 1401 performs various methods and processing described above, such as the method for vehicle-road collaboration. For example, in some embodiments, the method for vehicle-road collaboration may be implemented as a computer software program that is tangibly included in a machine-readable medium such as the storage unit 1408. In some embodiments, part or all of computer programs may be loaded and/or installed onto the electronic device 1400 via the ROM 1402 and/or the communication unit 1409. When the computer programs are loaded into the RAM 1403 and executed by the computing unit 1401, one or more steps of the method for vehicle-road collaboration described above may be performed. Alternatively, in other embodiments, the computing unit 1401 may be configured to perform the method for vehicle-road collaboration in any other suitable manner (for example, by means of firmware).

Various implementations of the systems and technologies described above in this paper may be implemented in a digital electronic circuit system, an integrated circuit system, a field programmable gate array (FPGA), an application specific integrated circuit (ASIC), an application specific standard part (ASSP), a system on chip (SOC), a complex programmable logic device (CPLD), computer hardware, firmware, software and/or their combinations. These various implementations may include: being implemented in one or more computer programs, wherein the one or more computer programs may be executed and/or interpreted on a programmable system including at least one programmable processor, and the programmable processor may be a special-purpose or general-purpose programmable processor, and may receive data and instructions from a storage system, at least one input apparatus, and at least one output apparatus, and transmit the data and the instructions to the storage system, the at least one input apparatus, and the at least one output apparatus.

Program codes for implementing the methods of the present disclosure may be written in any combination of one or more programming languages. These program codes may be provided to processors or controllers of a general-purpose computer, a special-purpose computer or other programmable data processing apparatuses, so that when executed by the processors or controllers, the program codes enable the functions/operations specified in the flow diagrams and/or block diagrams to be implemented. The program codes may be executed completely on a machine, partially on the machine, partially on the machine and partially on a remote machine as a separate software package, or completely on the remote machine or server.

In the context of the present disclosure, a machine readable medium may be a tangible medium that may contain or store a program for use by or in connection with an instruction execution system, apparatus or device. The machine readable medium may be a machine readable signal medium or a machine readable storage medium. The machine readable medium may include but not limited to an electronic, magnetic, optical, electromagnetic, infrared, or semiconductor system, apparatus or device, or any suitable combination of the above contents. More specific examples of the machine readable storage medium will include electrical connections based on one or more lines, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any suitable combination of the above contents.

In order to provide interactions with users, the systems and techniques described herein may be implemented on a computer, and the computer has: a display apparatus for displaying information to the users (e.g., a CRT (cathode ray tube) or LCD (liquid crystal display) monitor); and a keyboard and a pointing device (e.g., a mouse or trackball), through which the users may provide input to the computer. Other types of apparatuses may further be used to provide interactions with users; for example, feedback provided to the users may be any form of sensory feedback (e.g., visual feedback, auditory feedback, or tactile feedback); an input from the users may be received in any form (including acoustic input, voice input or tactile input).

The systems and techniques described herein may be implemented in a computing system including background components (e.g., as a data server), or a computing system including middleware components (e.g., an application server) or a computing system including front-end components (e.g., a user computer with a graphical user interface or a web browser through which a user may interact with the implementations of the systems and technologies described herein), or a computing system including any combination of such background components, middleware components, or front-end components. The components of the system may be interconnected by digital data communication (e.g., a communication network) in any form or medium. Examples of the communication network include: a local area network (LAN), a wide area network (WAN) and the Internet.

A computer system may include a client and a server. The client and the server are generally far away from each other and usually interact through a communication network. The relationship between the client and the server is generated by computer programs running on the corresponding computer and having a client-server relationship with each other. The server may be a cloud server, and may also be a server of a distributed system, or a server combined with a block chain.

It should be understood that the various forms of processes shown above may be used to reorder, add, or delete steps. For example, the steps recorded in the present disclosure may be performed in parallel, sequentially or in different orders, as long as the desired results of the technical solution disclosed by the present disclosure can be achieved, which is not limited herein.

Although the embodiments or examples of the present disclosure have been described with reference to the accompanying drawings, it should be understood that the above methods, systems and devices are only exemplary embodiments or examples, and the scope of the present invention is not limited by these embodiments or examples, but only by the authorized claims and their equivalent scope. Various elements in the embodiments or examples may be omitted or replaced by their equivalent elements. In addition, the steps may be performed in an order different from that described in the present disclosure. Further, various elements in the embodiments or examples may be combined in various ways. It is important that as technology evolves, many of the elements described herein may be replaced by equivalent elements that appear after the present disclosure.

## Claims

1. A method for vehicle-road collaboration, applied to a vehicle intelligent terminal, the method comprising:
sending (S301) service information of a vehicle where the vehicle intelligent terminal is located to a non-central cloud control platform registered with the vehicle intelligent terminal; and
receiving (S302) roadside information for aided driving or autonomous driving application services from the non-central cloud control platform.

2. The method according to claim 1, further comprising:
receiving a geo-fence range of the non-central cloud control platform from a vehicle intelligent terminal platform;
wherein sending the service information of the vehicle where the vehicle intelligent terminal is located to the non-central cloud control platform registered with the vehicle intelligent terminal comprises:
in response to determining that the vehicle is located within the geo-fence range of the non-central cloud control platform, sending the service information to the non-central cloud control platform.

3. The method according to claim 1, further comprising:
receiving a service address of the non-central cloud control platform from a vehicle intelligent terminal platform;
wherein sending the service information of the vehicle where the vehicle intelligent terminal is located to the non-central cloud control platform registered with the vehicle intelligent terminal comprises:
sending, based on the service address of the non-central cloud control platform, the service information to the non-central cloud control platform.

4. The method according to claim 1, wherein the service information comprises at least one of a longitude of the vehicle, a latitude of the vehicle, or a heading angle of the vehicle.

5. The method according to claim 1, further comprising:
receiving a terminal token from a vehicle intelligent terminal platform, the terminal token uniquely corresponding to the vehicle intelligent terminal;
wherein the service information comprises an extension field, and the extension field comprises the terminal token.

6. The method according to claim 1, wherein the vehicle intelligent terminal has a vehicle-to-everything (V2X) data analysis capability, and the roadside information comprises a V2X message, and optionally
wherein the roadside information comprises a V2X message extension field, and the V2X message extension field comprises a cloud control platform token corresponding to the non-central cloud control platform,
wherein the method further comprises:
receiving a key from a vehicle intelligent terminal platform, the key being shared by all vehicle intelligent terminals connected to the vehicle intelligent terminal platform; and
decrypting the cloud control platform token via the key.

7. The method according to claim 1, wherein the vehicle intelligent terminal does not have a vehicle-to-everything (V2X) data analysis capability, and the roadside information comprises at least one of signal lights data, traffic events data, and traffic operation conditions data, and optionally
wherein communication between the vehicle intelligent terminal and the non-central cloud control platform is performed via a cellular network.

8. A method for vehicle-road collaboration, applied to a vehicle intelligent terminal platform, the method comprising:
sending (S501) a geo-fence request to a central cloud control platform;
receiving (S502) geo-fence information from the central cloud control platform, the geo-fence information comprising a service address of a target non-central cloud control platform;
sending (S503), based on the service address of the target non-central cloud control platform, a registration application for a target vehicle intelligent terminal to the target non-central cloud control platform;
receiving (S504) registration information of the target vehicle intelligent terminal from the target non-central cloud control platform;
sending (S505) an authorization and authentication request of the target vehicle intelligent terminal to the target non-central cloud control platform; and
receiving (S506) an authorization and authentication result of the target vehicle intelligent terminal from the target non-central cloud control platform.

9. The method according to claim 8, wherein the registration information comprises at least one of the following:
information indicating whether the target vehicle intelligent terminal is successfully registered;
information for identifying the vehicle intelligent terminal platform;
information for identifying the target vehicle intelligent terminal;
information of a target vehicle where the target vehicle intelligent terminal is located;
a networking mode of the target vehicle intelligent terminal, the networking mode comprising at least one of 4G, 5G, or V2X;
an autonomous driving grade of the target vehicle; and
a category of the target vehicle, the category comprising at least one of a network-linked aided driving vehicle or an autonomous vehicle.

10. The method according to claim 8, wherein the authorization and authentication request indicates to obtain a terminal token for the target vehicle intelligent terminal, the terminal token uniquely corresponding to the target vehicle intelligent terminal, and the authorization and authentication result comprises one of the terminal token and information indicating an authorization failure,
wherein the method further comprises:
sending the terminal token to the target vehicle intelligent terminal.

11. The method according to claim 8, wherein the authorization and authentication request indicates to obtain a key shared by all vehicle intelligent terminals connected to the vehicle intelligent terminal platform, and the authorization and authentication result comprises one of the key and information indicating an authorization failure,
wherein the method further comprises:
sending the key to the target vehicle intelligent terminal.

12. The method according to claim 8, further comprising:
sending the service address of the target non-central cloud control platform to the target vehicle intelligent terminal.

13. The method according to claim 8, wherein the geo-fence information further comprises a geo-fence range of the target non-central cloud control platform,
wherein the method further comprises:
sending the geo-fence range of the target non-central cloud control platform to the target vehicle intelligent terminal.

14. A method for vehicle-road collaboration, applied to a central cloud control platform, the method comprising:
receiving (S701) a geo-fence request from a target vehicle intelligent terminal platform; and
sending (S702) geo-fence information to the target vehicle intelligent terminal platform, the geo-fence information comprising a service address of a target non-central cloud control platform.

15. A method for vehicle-road collaboration, applied to a non-central cloud control platform, the method comprising:
receiving (S801) a registration application for a target vehicle intelligent terminal from a target vehicle intelligent terminal platform;
sending (S802) registration information of the target vehicle intelligent terminal to the target vehicle intelligent terminal platform;
receiving (S803) an authorization and authentication request of the target vehicle intelligent terminal from the target vehicle intelligent terminal platform;
sending (S804) an authorization and authentication result of the target vehicle intelligent terminal to the target vehicle intelligent terminal platform;
receiving (S805) service information of a vehicle where the target vehicle intelligent terminal is located from the target vehicle intelligent terminal; and
sending (S806) roadside information for aided driving or autonomous driving application services to the target vehicle intelligent terminal.

16. An apparatus for vehicle-road collaboration, applied to a vehicle intelligent terminal, the apparatus comprising:
a first sending unit (910), configured to send service information of a vehicle where the vehicle intelligent terminal is located to a non-central cloud control platform registered with the vehicle intelligent terminal; and
a first receiving unit (920), configured to receive roadside information for aided driving or autonomous driving application services from the non-central cloud control platform.

17. An apparatus for vehicle-road collaboration, applied to a vehicle intelligent terminal platform, the apparatus comprising:
A second sending unit (1010), configured to send a geo-fence request to a central cloud control platform;
a second receiving unit (1020), configured to receive geo-fence information from the central cloud control platform, the geo-fence information comprising a service address of a target non-central cloud control platform;
a third sending unit (1030), configured to send, based on the service address of the target non-central cloud control platform, a registration application for a target vehicle intelligent terminal to the target non-central cloud control platform;
a third receiving unit (1040), configured to receive registration information of the target vehicle intelligent terminal from the target non-central cloud control platform;
a fourth sending unit (1050), configured to send an authorization and authentication request of the target vehicle intelligent terminal to the target non-central cloud control platform; and
a fourth receiving unit (1060), configured to receive an authorization and authentication result of the target vehicle intelligent terminal from the target non-central cloud control platform.

18. An apparatus for vehicle-road collaboration, applied to a central cloud control platform, and comprising:
a fifth receiving unit (1110), configured to receive a geo-fence request from a target vehicle intelligent terminal platform; and
a fifth sending unit (1120), configured to send geo-fence information to the target vehicle intelligent terminal platform, the geo-fence information comprising a service address of a target non-central cloud control platform.

19. An apparatus for vehicle-road collaboration, applied to a non-central cloud control platform, and comprising:
a sixth receiving unit (1210), configured to receive a registration application for a target vehicle intelligent terminal from a target vehicle intelligent terminal platform;
a sixth sending unit (1220), configured to send registration information of the target vehicle intelligent terminal to the target vehicle intelligent terminal platform;
a seventh receiving unit (1230), configured to receive an authorization and authentication request of the target vehicle intelligent terminal from the target vehicle intelligent terminal platform;
a seventh sending unit (1240), configured to send an authorization and authentication result of the target vehicle intelligent terminal to the target vehicle intelligent terminal platform;
an eighth receiving unit (1250), configured to receive service information of a vehicle where the target vehicle intelligent terminal is located from the target vehicle intelligent terminal; and
an eighth sending unit (1260), configured to send roadside information for aided driving or autonomous driving application services to the target vehicle intelligent terminal.

20. A system for vehicle-road collaboration, comprising:
the apparatus (900) according to claim 18;
the apparatus (1000) according to claim 19;
the apparatus (1100) according to claim 20; and
the apparatus (1200) according to claim 21.

21. An electronic device, comprising:
at least one processor; and
a memory in communication connection with the at least one processor, wherein
the memory stores instructions capable of being executed by the at least one processor, and the instructions are executed by the at least one processor to enable the at least one processor to execute the method according to any one of claims 1-15.

22. A non-transient computer readable storage medium storing computer instructions, wherein the computer instructions are configured to enable a computer to execute the method according to any one of claims 1-15.

23. A computer program product, comprising a computer program, wherein the computer program, when executed by a processor, implements the method according to any one of claims 1-15.

24. A vehicle intelligent terminal, comprising:
at least one processor; and
a memory in communication connection with the at least one processor, wherein
the memory stores instructions capable of being executed by the at least one processor, and the instructions are executed by the at least one processor to enable the at least one processor to execute the method executed by the vehicle intelligent terminal according to any one of claims 1-15.

25. A vehicle, comprising the vehicle intelligent terminal according to claim 24.

26. A vehicle intelligent terminal platform, comprising:
at least one processor; and
a memory in communication connection with the at least one processor, wherein
the memory stores instructions capable of being executed by the at least one processor, and the instructions are executed by the at least one processor to enable the at least one processor to execute the method executed by the vehicle intelligent terminal platform according to any one of claims 1-15.

27. A central cloud control platform, comprising:
at least one processor; and
a memory in communication connection with the at least one processor, wherein
the memory stores instructions capable of being executed by the at least one processor, and the instructions are executed by the at least one processor to enable the at least one processor to execute the method executed by the central cloud control platform according to any one of claims 1-15.

28. A non-central cloud control platform, comprising:
at least one processor; and
a memory in communication connection with the at least one processor, wherein
the memory stores instructions capable of being executed by the at least one processor, and the instructions are executed by the at least one processor to enable the at least one processor to execute the method executed by the non-central cloud control platform according to any one of claims 1-15.

29. A system for vehicle-road collaboration, comprising:
the vehicle intelligent terminal according to claim 24 or the vehicle according to claim 25;
the vehicle intelligent terminal platform according to claim 26;
the central cloud control platform according to claim 27; and
the non-central cloud control platform according to claim 28.
